# EUROPÄISCHE PATENTSCHRIFT

(11) **EP 0 446 823 B1**
(45) Veröffentlichungstag und Bekanntmachung des Hinweises auf die Patenterteilung: **01.06.1994**
(21) Anmeldenummer: 91103647.3
(22) Anmeldetag: 09.03.1991
(51) Int. Cl.: F16J 15/32, B60K 17/30

(54) **Dichtungsanordnung**
Sealing arrangement
Dispositif d'étanchéité

(30) Priorität: 13.03.1990 DE 4007879
(43) Veröffentlichungstag der Anmeldung: 18.09.1991
(73) Patentinhaber: ZF FRIEDRICHSHAFEN Aktiengesellschaft, 88038 Friedrichshafen (DE)
(72) Erfinder: Katzenszeiner, Josef Roman, W-8390 Passau (DE)

(56) Entgegenhaltungen:
- EP-A- 0 233 000
- WO-A-87/03946
- GB-A- 881 607

## Beschreibung

Die Erfindung bezieht sich auf eine Dichtungsanordnung in Kassettenbauweise mit je einem inneren und äußeren ringförmigen Gehäuse, die einen etwa U-förmigen Querschnitt aufweisen und relativ zueinander drehbar sind, einer ersten, inneren Dichtungsgarnitur und einer zweiten, äußeren Dichtungsgarnitur mit zumindest je einer Dichtlippe, die an axial gerichteten Abschnitten der ringförmigen Gehäuse dichtend anliegen.

Eine Dichtungsanordnung in Kassettenbauweise der eingangs genannten Art ist aus der GB-PS 88 16 07 bekanntgeworden. Diese Dichtungsanordnung eignet sich zur Abdichtung rotierender Bauteile. Sie ist jedoch nicht für die Übernahme von Dichtungsaufgaben geeignet, bei denen der rotierenden Bewegung eine lineare Bewegung überlagert ist.

Dichtungsaufgaben, bei denen einer rotierenden Bewegung eine lineare Bewegung überlagert ist, sind vor allem bei land- und/oder bauwirtschaftlich genutzten Fahrzeugen, beispielsweise in Lenkachsen, anzutreffen. Derartige Dichtungsanordnungen sind im praktischen Einsatz den widrigsten Bedingungen ausgesetzt. Landwirtschaftliche Erntemaschinen werden beispielsweise bei der Reisernte in nassem, schlammigem Gelände eingesetzt. Für die Fahrzeuge geeignete Dichtungsanordnungen müssen eine einwandfreie Abdichtung unter schwierigen äußeren Bedingungen gewährleisten. Dabei soll aber der Aufwand für deren Herstellung, Montage und Ersatzteilhaltung niedrig sein.

Der Erfindung liegt die Aufgabe zugrunde, eine Dichtungsanordnung in Kassettenbauweise der eingangs genannten Art so weiterzubilden, daß sie für Dichtungsaufgaben, bei denen einer rotierenden Bewegung eine lineare Bewegung überlagert ist, eingesetzt werden kann.

Die der Erfindung zugrunde liegende Aufgabe wird bei einer ersten Ausführungsform dadurch gelöst, daß der äußere, axial gerichtete Abschnitt des inneren, ringförmigen Gehäuses parallel zu und zwischen den Abschnitten des äußeren, ringförmigen Gehäuses verläuft und die innere Dichtungsgarnitur zwischen den beiden inneren, axial gerichteten Abschnitten des inneren und äußeren, ringförmigen Gehäuses angeordnet ist. Die äußere Dichtungsgarnitur ist zwischen den beiden äußeren, axial gerichteten Abschnitten des inneren und äußeren, ringförmigen Gehäuses angeordnet. Das innere und äußere, ringförmige Gehäuse sind in Axialrichtung relativ zueinander verschiebbar, wobei die axial gerichteten Abschnitte eine Länge aufweisen, die eine dichtende Anlage der Dichtlippen der inneren und äußeren Dichtungsgarnitur über den gesamten axialen Verschiebeweg gewährleisten.

Eine weitere Lösung der der Erfindung zugrunde liegenden Aufgabe besteht darin, daß der äußere, axial gerichtete Abschnitt des inneren, ringförmigen Gehäuses parallel zu und zwischen den Abschnitten des äußeren, ringförmigen Gehäuses verläuft und die innere Dichtungsgarnitur zwischen den beiden inneren, axial gerichteten Abschnitten des inneren und äußeren, ringförmigen Gehäuses angeordnet ist und die äußere Dichtungsgarnitur zwischen dem äußeren, axial gerichteten Abschnitt des inneren Gehäuses und dem inneren, axial gerichteten Abschnitt des äußeren, ringförmigen Gehäuses angeordnet ist. Das innere und äußere, ringförmige Gehäuse sind in Axialrichtung relativ zueinander verschiebbar. Die axial gerichteten Abschnitte weisen eine Länge auf, die eine dichtende Anlage der Dichtlippen der inneren und äußeren Dichtungsgarnitur über den gesamten axialen Verschiebeweg gewährleisten. Da die erfindungsgemäßen Dichtungsanordnungen in Kassettenbauweise eine zuverlässige Abdichtung zwischen Bauteilen, die relativ zueinander eine rotierende und gleichzeitig linear überlagerte Bewegung ausführen, gewährleisten, eignet sich die vorgeschlagene Dichtungsanordnung insbesondere zum Abdichten einer axial verschiebbar gelagerten Antriebswelle einer gelenkten Achse eines land- oder bauwirtschaftlich genutzten Fahrzeugs. Da die Verwendung einer Dichtungsanordnung in Kassettenbauweise zur Lösung dieses bekannten Problems neu ist, wird hierfür gesondert Schutz begehrt.

Bei einer bevorzugten Ausgestaltung der erfindungsgemäßen Dichtungsanordnung ist die innere Dichtungsgarnitur am inneren, axial gerichteten Abschnitt des inneren, ringförmigen Gehäuses montiert. Die Dichtungsgarnitur weist radial nach außen gerichtete Dichtlippen auf, die am inneren, axial gerichteten Abschnitt des äußeren ringförmigen Gehäuses anliegen.

Bei der ersten erfindungsgemäßen Ausführungsform ist die äußere Dichtungsgarnitur am äußeren, axial gerichteten Abschnitt des äußeren, ringförmigen Gehäuses montiert und liegt mit radial nach innen gerichteten Dichtlippen am äußeren, axial gerichteten Abschnitt des inneren, ringförmigen Gehäuses an. Bei der zweiten Lösung ist vorgesehen, die äußere Dichtungsgarnitur am äußeren, axial gerichteten Abschnitt des inneren, ringförmigen Gehäuses zu montieren, so daß die äußere Dichtungsgarnitur mit radial nach innen gerichteten Dichtlippen am inneren axial gerichteten Abschnitt des äußeren ringförmigen Gehäuses anliegt. Beim ersten Lösungsvorschlag wird die äußere Dichtungsgarnitur vom außenliegenden Schenkel des äußeren Gehäuses gehalten und liegt dichtend am außenliegenden, axial gerichteten Abschnitt des inneren Gehäuses an. Beim zweiten Lösungsvorschlag wird die äußere Dichtungsgarnitur vom außenliegenden, axial gerichteten Abschnitt des inneren Gehäuses gehalten und liegt am inneren, axial gerichteten Abschnitt des äußeren Gehäuses dichtend an.

Die Antriebswelle einer gelenkten Achse eines landwirtschaftlich genutzten Fahrzeugs ist von einem Innenraum eines Achsrohrs, der mit Öl gefüllt ist, durch einen Außenraum zu einem Endantriebsgehäuse, in dem beispielsweise ein Planetengetriebe untergebracht ist, geführt. In diesem Zusammenhang ist es vorteilhaft, das äußere ringförmige Gehäuse ortsfest im Achsrohr oder im Endantriebsgehäuse so zu montieren, daß seine geschlossene Ringfläche dem Außenraum zugekehrt ist. Die geschlossene Ringfläche bietet einen wirksamen Schutz der gesamten Dichtungsanordnung vor äußeren Einflüssen (Erde, Lehm oder dergleichen oder auch Eis).

Da die Dichtlippen der inneren Dichtungsgarnitur dem Außenraum zugekehrt sind, ist es besonders vorteilhaft, diese Dichtlippen als Abstreiflippen auszubilden, die radial und schräg zum Außenraum gerichtet verlaufen.

Eine zuverlässige Abdichtung bei ausreichend großer Lebensdauer wird mit mehr als zwei, insbesondere fünf Abstreiflippen erreicht.

Da die äußere Dichtungsgarnitur die Abdichtung zum ölgefüllten Innenraum übernimmt, ist es vorteilhaft, diese Dichtungsgarnitur als Radialwellendichtring auszubilden, der zumindest eine federbelastete Dichtlippe aufweist.

Bei Verwendung eines Radialwellendichtrings mit zwei federbelasteten Dichtlippen ist es besonders vorteilhaft, den axialen Abstand der Dichtlippen derart zu wählen, daß er größer als die Axialverschiebung der Antriebswelle ist. Auf diese Art und Weise ist sichergestellt, daß kein Überfahren von Laufrillen der Dichtlippen stattfindet, was einen schnellen Verschleiß des Radialwellendichtrings zur Folge hätte.

Um die Lebensdauer des Radialwellendichtrings zu erhöhen, ist es vorteilhaft, zwischen dem Außenraum und der dem Innenraum zugekehrten, federbelasteten Dichtlippe zumindest eine Schutzlippe vorzusehen, die Bestandteil des Radialwellendichtrings ist.

Nach einem weiteren, sehr vorteilhaften Merkmal der Erfindung weist der axial gerichtete Abschnitt des inneren, ringförmigen Gehäuses einen etwa vertikal gerichteten Bund auf. Dieser Bund liegt zwischen der geschlossenen Ringfläche und dem Radialwellendichtring. Der Bund stellt einerseits sicher, daß das innere und äußere, ringförmige Gehäuse eine Montageeinheit bilden, d. h. nicht auseinanderfallen können, und zum anderen erleichtert er die Montage der Dichtungsanordnung. Der Bund bewirkt - etwa bei fehlerhafter Montage - eine Selbsteinstellulng zwischen dem inneren und dem äußeren, ringförmigen Gehäuse.

Es ist vorteilhaft, den Radialwellendichtring in das innere (vorstehend erwähnter, erster Vorschlag) bzw. äußere (vorstehend erwähnter, zweiter Vorschlag), ringförmige Gehäuse einzupressen und durch eine Verbördelung zu sichern.

Es ist vorteilhaft, wenn der innere, axial gerichtete Abschnitt des inneren, ringförmigen Gehäuses mit einer Innengummierung versehen ist.

Die innere Dichtungsgarnitur kann bedarfsweise als separates Bauteil ausgebildet sein.

Eine Fettfüllung der Räume zwischen den Abstreif- und Dichtlippen erhöht die Lebensdauer der Dichtungsanordnung.

Zur Stützung des Radialwellendichtrings empfiehlt sich ein Stützwinkel, der zwischen diesem und der Verbördelung eingeschaltet ist.

Eine vorteilhafte Anordnung und Ausgestaltung der inneren Dichtungsgarnitur ist gegeben, wenn die innere Dichtungsgarnitur am inneren, axial gerichteten Abschnitt des äußeren, ringförmigen Gehäuses montiert ist und mit radial nach innen gerichteten Dichtlippen am inneren, axial gerichteten Abschnitt des inneren, ringförmigen Gehäuses anliegt.

Um die innere Dichtungsgarnitur zusätzlich zu schützen, ist die Anordnung eines Ringkragens vorteilhaft. Dieser ist, bezogen auf den Außenraum, der Dichtungsgarnitur vorgeschaltet.

Um eine Pumpwirkung der Dichtungsanordnung praktisch auszuschalten, liegt der Volumenänderungsfaktor der Volumina des Innenraums der Dichtungsanordnung bei relativer Axialverschiebung des inneren und äußeren Gehäuses in einem Bereich von Faktor 1,056 bis Faktor 1,280.

Weitere, wesentliche Merkmale der Erfindung und die daraus resultierenden Vorteile sind der nachfolgenden Beschreibung mehrerer Ausführungsbeispiele anhand der Zeichnungen zu entnehmen.
Es zeigen:
- Fig. 1: die schematische Darstellung des oberen Teils einer angetriebenen Achse im Längsschnitt;
- Fig. 2: eine erste Dichtungsanordnung im Bereich einer Wandung der Achse nach Fig. 1 in einer möglichen Endlage;
- Fig. 3: die Dichtungsanordnung nach Fig. 2 in einer weiteren möglichen Endlage und
- Fig. 4 bis 9: weitere Dichtungsanordnungen im Längsschnitt.

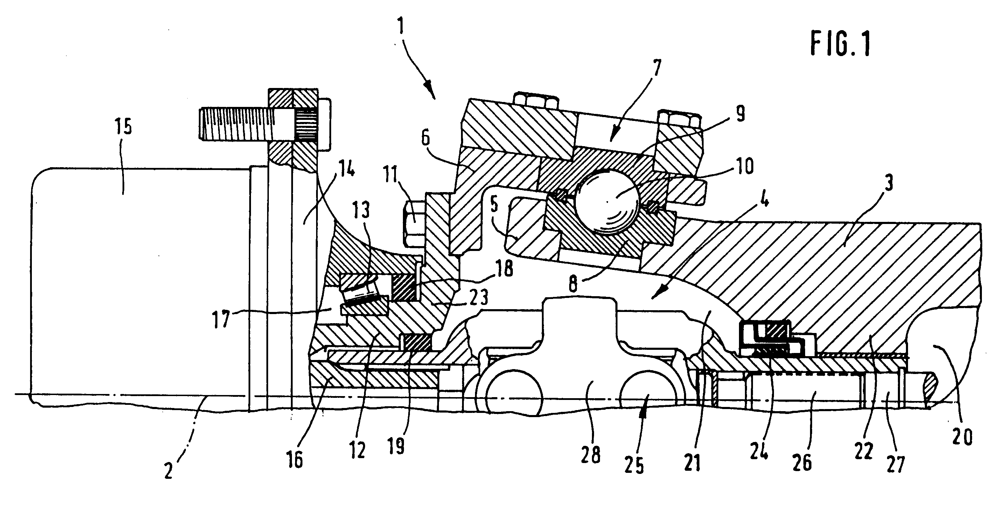

In Fig. 1 ist eine angetriebene Achse 1 eines selbst nicht dargestellten land- und/oder bauwirtschaftlich genutzten Fahrzeugs teilweise dargestellt. Die Abbildung zeigt einen schematischen Längsschnitt durch den oberen Teil der Achse 1.

Angaben über die räumliche Anordnung bzw. Erstreckung einzelner Bauteile sind, soweit im einzelnen nicht ausdrücklich erläutert, wie folgt zu verstehen:
- "links": = in der Zeichnung linksliegend
- "rechts": = in der Zeichnung rechtsliegend
- "oben": = in der Zeichnung obenliegend
- "unten": = in der Zeichnung untenliegend
- "außen" bzw. "äußere": = sich radial von einer Längsmittellinie 2 weg erstreckend und
- "innen" bzw. "innere": = sich zur Längsmittellinie 2 hin erstreckend.

Ein feststehendes Achsrohr 3 geht an seinem linksliegenden Ende in einen Gelenkkopf 4 über. Der Gelenkkopf 4 kann gabelförmig oder kugelförmig ausgebildet sein. Der obere Schenkel 5 ist aus der Zeichnung ersichtlich.

Gegenüber dem feststehenden Achsrohr 3 ist ein Gelenkgehäuse 6 über zwei Achsschenkellager, von denen das obere Achsschenkellager 7 abgebildet ist, schwenkbeweglich gelagert. Das Achsschenkellager 7 wird aus einer unteren Kugelschale 8 und einer oberen Kugelschale 9 sowie einer Kugel 10 gebildet.

Am Gelenkgehäuse 6 ist mit Hilfe von Schrauben 11 ein Nabenträger 12 angeflanscht. Auf dem Nabenträger 12 ist über ein Kegelrollenlager 13 eine Radnabe 14 drehbar gelagert. Die Radnabe 14 ist mit einem etwa topfförmigen Endabtriebsgehäuse 15 drehfest verbunden. Im Inneren des Endabtriebsgehäuses 15 ist ein selbst nicht dargestelltes Reduktionsgetriebe, z. B. ein Planetengetriebe, untergebracht. Von diesem Reduktionsgetriebe ragt eine Sonnenradwelle 16 nach rechts aus dem Endabtriebsgehäuse 15. Der durch die Radnabe 14 begrenzte Innenraum 17 des Endabtriebsgehäuses 15 ist nach außen über zwei Dichtungen 18 und 19 abgedichtet. Die Dichtung 18 ist drehfest in der Radnabe 14 und die Dichtung 19 ist drehfest in der Hohlachse 12 untergebracht.

Das Achsrohr 3 weist einen Innenraum 20 auf. Zwischen dem Innenraum 17 des Endabtriebsgehäuses 15 und dem Innenraum 20 des Achsrohrs 3 befindet sich ein Außenraum 21, der nach außen im wesentlichen offen ist und durch den Gelenkkopf 4 und das Gelenkgehäuse 6 begrenzt wird.

Der Außenraum 21 ist durch eine Wandung 22 des Achsrohrs 3 vom Innenraum 20 des Achsrohrs 3 einerseits und andererseits von einer Wandung 23 der Hohlachse 12 vom Innenraum 17 des Endabtriebsgehäuses 15 getrennt.

Im dargestellten Ausführungsbeispiel nach Fig. 1 ist innerhalb der Wandung 22 eine Dichtungsanordnung 24 zum Abdichten eines Bauteils 25 vorgesehen. Das Bauteil 25 ist vom Innenraum 20 des Achsrohrs 3 zum Außenraum 21 bzw. vom Innenraum 17 des Endabtriebsgehäuses 15 zum Außenraum 21 geführt. Das Bauteil 25 führt rotierende und lineare Bewegungen aus.

Im Falle der beschriebenen lenkbaren Achse 1 für ein landwirtschaftliches Fahrzeug handelt es sich bei dem Bauteil 25 um eine Antriebswelle 26. Die Antriebswelle 26 setzt sich aus mehreren Teilen zusammen und stellt eine Antriebsverbindung von einem selbst nicht dargestellten Ausgleichsgetriebe zum angetriebenen Endabtriebsgehäuse 15 her. Die Antriebswelle 26 besteht im einzelnen aus einer Achshalbwelle 27, einem Doppelkreuzgelenk 28 und der bereits erwähnten Sonnenradwelle 16. Die das Endabtriebsgehäuse 15 treibende Antriebswelle 26 rotiert während des Betriebs. Diese Rotationsbewegung ist einer Verschiebebewegung in Axialrichtung (in Richtung der Längsmittelline 2) überlagert, die eine Folge der Schwenkbewegungen des Gelenkgehäuses 6 beim Lenken ist.

Bei dem Ausführungsbeispiel nach Fig. 1 ist die Sonnenradwelle 16 in Axialrichtung feststehend angeordnet. Demzufolge tritt bei Lenkbewegungen auf der Antriebsseite des Doppelkreuzgelenks 28, d. h. auf der rechten Seite des Doppelkreuzgelenks 28, eine axiale Verschiebebewegung auf. Die Achshalbwelle 27 wird nach rechts verschoben, wenn die Räder aus der Geradeausfahrtstellung, wie abgebildet, eingelenkt werden. Die gezeigte Anordnung kann jedoch ohne weiteres so abgewandelt werden, daß die Achshalbwelle 27 feststehend gelagert ist und keine axiale Verschiebebewegung ausführt. Die axiale Verschiebebewegung tritt dann auf der gegenüberliegenden Seite des Doppelkreuzgelenks 28 auf. In diesem Fall wäre die Dichtungsanordnung 24 auf dieser Seite vorzusehen.

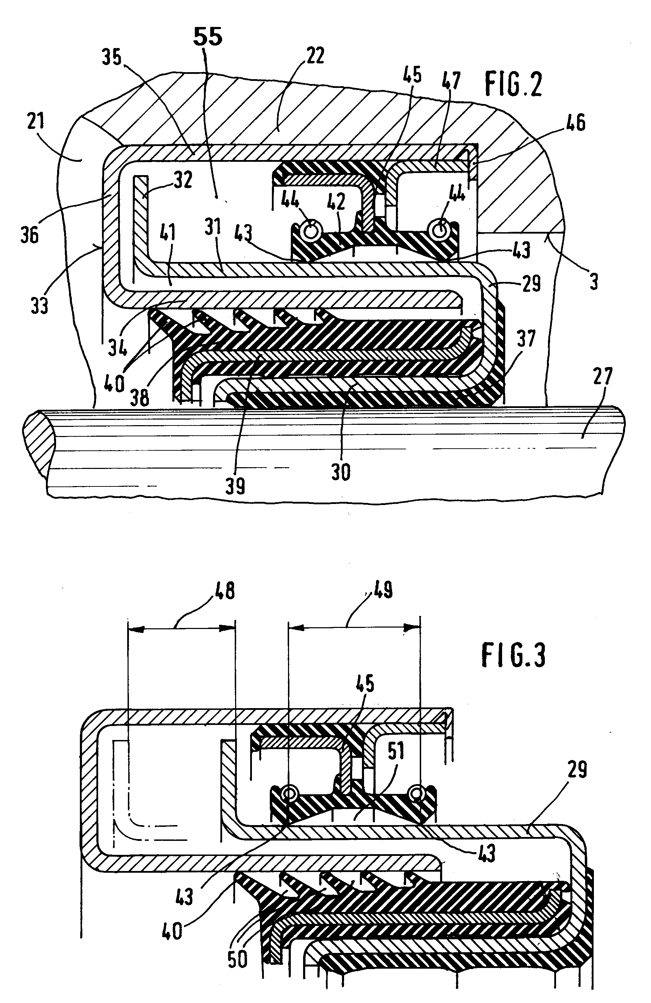

Der Abbildung entsprechend Fig. 2 sind weitere Einzelheiten der Dichtungsanordnung 24 im Bereich der Wandung 22 des Achsrohrs 3 in der der Geradeausfahrtstellung entsprechenden Position zu entnehmen.

Es handelt sich um eine Dichtungsanordnung 24 in Kassettenbauweise mit einem inneren ringförmigen Gehäuse 29. Das innere ringförmige Gehäuse 29 verfügt über einen inneren axial gerichteten Abschnitt 30 und einen äußeren axial gerichteten Abschnitt 31. Der äußere axial gerichtete Abschnitt 31 geht in einen etwa vertikal gerichteten Bund 32 über.

Ein äußeres ringförmiges Gehäuse 33 verfügt über einen inneren axial gerichteten Abschnitt 34 und einen äußeren axial gerichteten Abschnitt 35. Das äußere ringförmige Gehäuse 33 weist eine geschlossene Ringfläche 36 auf, durch die der innere axial gerichtete Abschnitt 34 mit dem äußeren axial gerichteten Abschnitt 35 verbunden ist. Die geschlossene Ringfläche ist dem Außenraum 21 zugekehrt.

Der innere axial gerichtete Abschnitt 30 des inneren ringförmigen Gehäuses 29 ist mit einer Innengummierung 37 beschichtet und mit der Achshalbwelle 27 (Antriebswelle 26) drehfest verbunden.

Eine erste, innere Dichtungsgarnitur 38 ist als separates Bauteil ausgebildet und durch einen Versteifungsring 39 verstärkt. Die erste, innere Dichtungsgarnitur 38 ist am inneren axial gerichteten Abschnitt 30 des inneren ringförmigen Gehäuses montiert. Hierzu ist es auf den Abschnitt 30 festsitzend aufgeschoben.

Die erste, innere Dichtungsgarnitur 38 weist schräg nach außen in Richtung auf den Außenraum 21 gerichtete Dichtlippen 40 auf. Es sind zumindest zwei, vorzugsweise jedoch fünf Dichtlippen 40 vorgesehen. Die Dichtlippen 40 liegen am inneren axial gerichteten Abschnitt 34 des äußeren ringförmigen Gehäuses 33 an.

Der äußere axial gerichtete Abschnitt 31 verläuft parallel zu und zwischen den Abschnitten 34 und 35 des äußeren ringförmigen Gehäuses 33. Zwischen dem Abschnitt 31 und dem Abschnitt 34 befindet sich ein Luftspalt 41.

Eine zweite, äußere Dichtungsgarnitur 42 weist zumindest eine, vorzugsweise jedoch zwei Dichtlippen 43 auf. Die Dichtlippen 43 sind durch Zugfedern 44 federbelastet. Die zweite, äußere Dichtungsgarnitur 42 ist als Radialwellendichtring 45 ausgebildet. Dieser Radialwellendichtring 45 ist am äußeren axial gerichteten Abschnitt 35 des äußeren ringförmigen Gehäuses 33 montiert und liegt mit seinen radial nach innen gerichteten Dichtlippen 43 am äußeren axial gerichteten Abschnitt 31 des inneren ringförmigen Gehäuses 29 an.

Der Radialwellendichtring 45 ist in das äußere ringförmige Gehäuse 33 eingepreßt und durch eine Verbördelung 46 gesichert. Zwischen dem Radialwellendichtring 45 und der Verbördelung 46 ist ein Stützwinkel 47 eingeschaltet.

Aus der bisher beschriebenen Anordnung geht deutlich hervor, daß das innere und äußere ringförmige Gehäuse 29 und 33 in Axialrichtung relativ zueinander verschiebhar angeordnet sind. Die axial gerichteten Abschnitte 30, 31 und 34, 35 weisen eine Länge auf, die eine dichtende Anlage der Dichtlippen 40 und 43 der inneren und äußeren Dichtungsgarnitur 38 und 42 über den gesamten axialen Verschiebeweg (vgl. Fig. 3) gewährleistet. In Fig. 3 ist das innere ringförmige Gehäuse 29 in seiner rechten Endlage wiedergegeben. Die Abbildung entspricht der Position der Dichtungsanordnung 24 bei Kurvenfahrt, und zwar bei vollständig eingeschlagenen Lenkrädern. Die Abbildung verdeutlicht ferner, daß der Abstand 49 der Dichtlippen 43 größer als der axiale Verschiebeweg 48 ist. Diese Bemessung hat den Vorteil, daß kein "Überfahren" von Laufrillen der Dichtlippen 43 stattfindet, was einen erhöhten Verschleiß des Radialwellendichtrings 45 zur Folge hätte.

Die Räume 50 und 51 zwischen den Dichtlippen 40 und 43 sind mit Fett gefüllt, um die Lebensdauer der Dichtungsanordnung 24 zu erhöhen.

Die Abbildung entsprechend Fig. 3 verdeutlicht ferner, daß bei ausgezogenem Zustand der Dichtungsanordnung 24 eine gute Sichtkontrolle der Laufflächen der Dichtlippen 40 bzw. 43 möglich ist. Dieser Vorteil erweist sich bei der Montage der Dichtungsanordnung als sehr günstig.

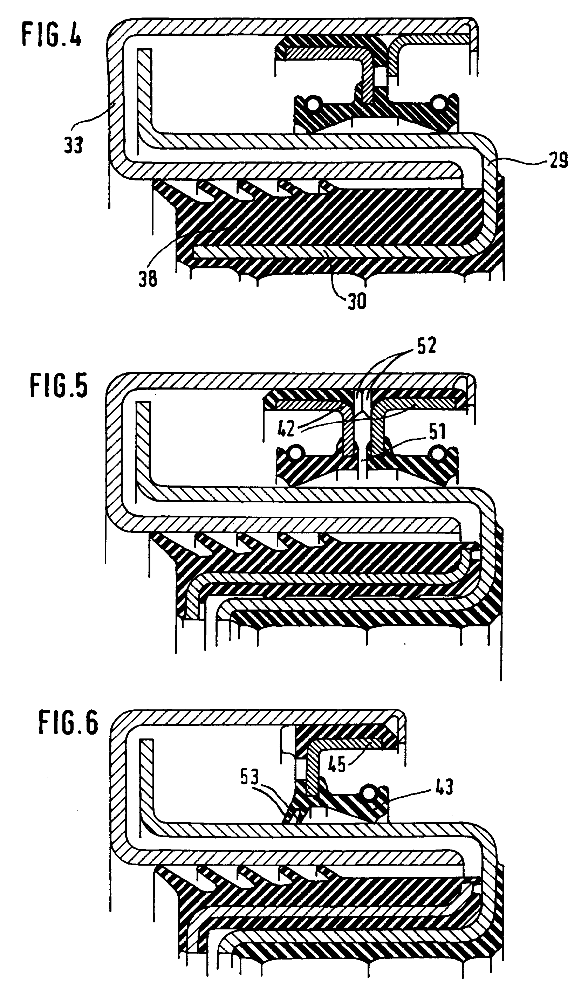

Die Dichtungsanordnungen nach den Fig. 4 bis 6 stimmen in ihrem prinzipiellen Aufbau mit der Dichtungsanordnung nach Fig. 2 überein. Bei dem Ausführungsbeispiel nach Fig. 4 ist die innere Dichtungsgarnitur 38 nicht als separates Bauteil ausgebildet, sondern - durch Vulkanisieren - direkt mit dem inneren, axial gerichteten Abschnitt 30 fest verbunden.

Bei der Anordnung nach Fig. 5 finden zwei Radialwellendichtringe 45 anstelle eines Duo-Radialwellendichtrings Verwendung. Beide Radialwellendichtringe 45 sind "Rücken an Rücken" montiert. Der Abstand zwischen den Radialwellendichtringen läßt sich durch geeignete Abstandshalter 52 variieren, so daß das Volumen des mit Fett gefüllten Raums 51 zusätzlich vergrößert werden kann.

Bei der Ausführungsform nach Fig. 6 findet ein Radialwellendichtring 45 mit einer Dichtlippe 43 Verwendung. Der Dichtlippe 43 sind zwei Schutzlippen 53 vorgeschaltet.

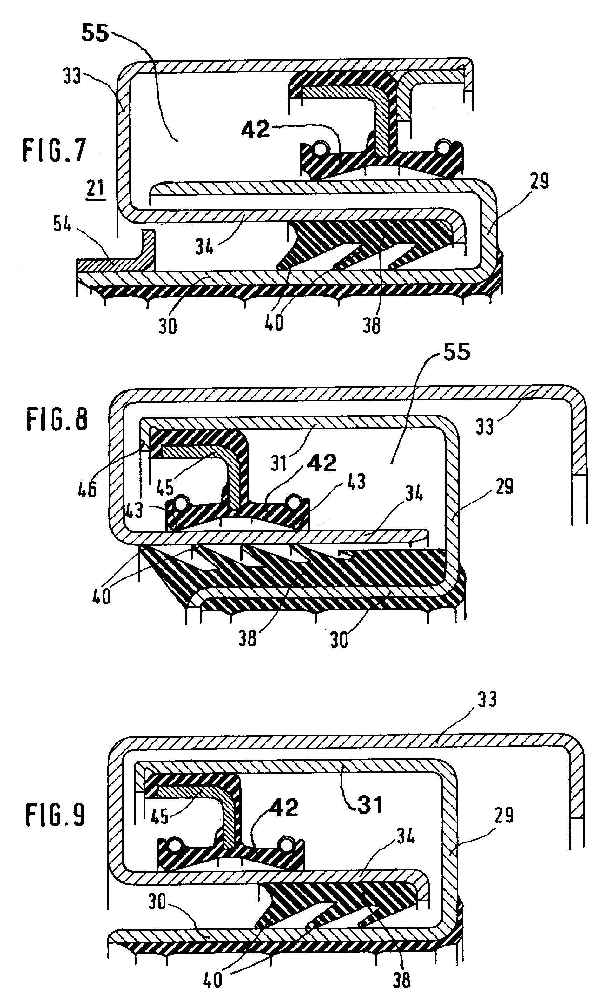

Die Dichtungsanordnung nach Fig. 7 weist in wesentlichen Punkten Übereinstimmung mit den Dichtungsanordnungen nach den Fig. 2 und 4 auf. Ein wesentlicher Unterschied besteht jedoch hinsichtlich der Montage der ersten, inneren Dichtungsgarnitur 38. Diese Dichtungsgarnitur 38 ist am inneren, axial gerichteten Abschnitt 34 des äußeren ringförmigen Gehäuses 33 fest angeordnet. Die Dichtlippen 40 der ersten Dichtungsgarnitur 38 erstrecken sich radial nach innen und weisen in Richtung auf den Außenraum 21. Die Dichtlippen 40 liegen dichtend am inneren axial gerichteten Abschnitt 30 des inneren ringförmigen Gehäuses 29 an. Auf den inneren axial gerichteten Abschnitt 30 ist ein Ringkragen 54, der einen winkelförmigen Querschnitt hat, aufgepreßt. Der Ringkragen 54 bildet einen wirksamen Schutz für die erste Dichtungsgarnitur 38. Im übrigen ist aber sichergestellt, daß der Ablauf von Wasser aus dem Hohlraum zwischen dem Ringkragen 54 und der ersten Dichtlippe 40 der Dichtungsgarnitur 38 nicht behindert wird, so daß es beispielsweise zu keiner Eisbildung kommen kann.

Die Dichtungsanordnung nach Fig. 8 stimmt hinsichtlich der Anordnung der ersten Dichtungsgarnitur 38 am inneren axial gerichteten Abschnitt 30 des inneren ringförmigen Gehäuses 29 mit der Anordnung nach Fig. 4 überein. Ein wesentlicher Unterschied besteht jedoch hinsichtlich der Anordnung des Radialwellendichtrings 45. Dieser ist am äußeren axial gerichteten Abschnitt 31 des inneren ringförmigen Gehäuses 29 montiert. Demzufolge befindet sich auch die Verbördelung 46 an diesem Abschnitt 31. Die Dichtlippen 43 des Radialwellendichtrings 45 liegen dichtend außen am inneren axial gerichteten Abschnitt 34 des äußeren ringförmigen Gehäuses 33 an. An der Innenseite des Abschnitts 34 kommen demzufolge die Dichtlippen 40 der ersten Dichtungsgarnitur 38 zur Anlage.

Die Dichtungsanordnung entsprechend der Abbildung Fig. 9 weist Gemeinsamkeiten mit derjenigen nach Fig. 8 auf. Die erste, innere Dichtungsgarnitur 38 ist jedoch bei dieser Ausführungsform an der Innenseite des inneren axial gerichteten Abschnitts 34 des äußeren ringförmigen Gehäuses 33 angeordnet. Die Dichtlippen 40 liegen am Abschnitt 30 des Gehäuses 29 an (insofern besteht Übereinstimmung mit der Anordnung nach Fig. 7).

Die Abbildungen entsprechend den Fig. 2 und 4 bis 9 zeigen die Dichtungsanordnungen in der der Geradeausfahrt der gelenkten Räder entsprechenden Stellung. In dieser Position ragt das innere Gehäuse 29 am weitesten in das äußere Gehäuse 33 hinein. Wie bereits erwähnt, gibt die Abbildung entsprechend Fig. 3 die relative Lage des Gehäuses 29 in bezug auf das Gehäuse 33 in der Stellung wieder, die derjenigen der eingeschlagenen, gelenkten Räder entspricht. Das im Innenraum der Dichtungsanordnung 24 zwischen der ersten Dichtungsgarnitur 38 und der zweiten Dichtungsgarnitur 42 eingeschlossene Volumen sollte theoretisch keine Abweichungen zwischen der "Geradeausfahrtstellung" und der Stellung "eingeschlagene Lenkräder" aufweisen. Dies deswegen, weil auftretende Differenzen der Volumina zu unerwünschten Pumpwirkungen führen. Bei sämtlich beschriebenen Dichtungsanordnungen sind die Abweichungen der Volumina so gering, daß auftretende Pumpwirkungen ohne weiteres akzeptiert werden können. Bei der Dichtungsanordnung nach Fig. 2 beträgt der Faktor der Volumensveränderung 1,144. Dieser Faktor gilt auch für die Anordnungen nach den Fig. 4 bis 6. Die Anordnung nach Fig. 7 weist einen entsprechenden Faktor von 1,28 und die Anordnung nach Fig. 8 einen von 1,056 auf. Schließlich beträgt der Volumensänderungsfaktor bei der Dichtungsanordnung nach Fig. 9 1,23.

### Bezugszeichen

- 1: Achse
- 2: Längsmittellinie
- 3: Achsrohr
- 4: Gelenkkopf
- 5: Schenkel
- 6: Gelenkgehäuse
- 7: oberes Achsschenkellager
- 8: untere Kugelschale
- 9: obere Kugelschale
- 10: Kugel
- 11: Schrauben
- 12: Nabenträger
- 13: Kegelrollenlager
- 14: Radnabe
- 15: Endabtriebsgehäuse
- 16: Sonnenradwelle
- 17: Innenraum
- 18: Dichtring
- 19: Dichtring
- 20: Innenraum
- 21: Außenraum
- 22: Wandung
- 23: Wandung
- 24: Dichtungsanordnung
- 25: Bauteil
- 26: Antriebswelle
- 27: Achshalbwelle
- 28: Doppelkreuzgelenk
- 29: inneres ringförmiges Gehäuse
- 30: innerer axial gerichteter Abschnitt
- 31: äußerer axial gerichteter Abschnitt
- 32: vertikal gerichteter Bund
- 33: äußeres ringförmiges Gehäuse
- 34: innerer axial gerichteter Abschnitt
- 35: äußerer axial gerichteter Abschnitt
- 36: geschlossene Ringfläche
- 37: Innengummierung
- 38: erste innere Dichtungsgarnitur
- 39: Versteifungsring
- 40: Dichtlippen
- 41: Luftspalt
- 42: zweite äußere Dichtungsgarnitur
- 43: Dichtlippe
- 44: Zugfeder
- 45: Radialwellendichtring
- 46: Verbördelung
- 47: Stützwinkel
- 48: Verschiebeweg
- 49: Abstand
- 50: Fettraum
- 51: Fettraum
- 52: Abstandshalter
- 53: Schutzlippen
- 54: Ringkragen
- 55: Innenraum der Dichtungsanordnung 24

## Patentansprüche

1. Dichtungsanordnung (24) in Kassettenbauweise mit je einem inneren und äußeren, ringförmigen Gehäuse (29, 33), die einen etwa U-förmigen Querschnitt aufweisen und relativ zueinander drehbar sind, einer ersten, inneren Dichtungsgarnitur (38) und einer zweiten, äußeren Dichtungsgarnitur (42) mit zumindest je einer Dichtlippe (40, 43), die an axial gerichteten Abschnitten (30, 31, 34, 35) des ringförmigen Gehäuses (29, 33) dichtend anliegen, dadurch **gekennzeichnet**, daß der äußere, axial gerichtete Abschnitt (31) des inneren, ringförmigen Gehäuses (29) parallel zu und zwischen den Abschnitten (34, 35) des äußeren, ringförmigen Gehäuses (33) verläuft und die innere Dichtungsgarnitur (38) zwischen den beiden inneren, axial gerichteten Abschnitten (30, 34) des inneren und äußeren, ringförmigen Gehäuses angeordnet ist, und die äußere Dichtungsgarnitur (42) zwischen den beiden äußeren, axial gerichteten Abschnitten (31, 35) des inneren und äußeren, ringförmigen Gehäuses (29, 33) angeordnet ist, wobei das innere und äußere, ringförmige Gehäuse (29, 33) in Axialrichtung relativ zueinander verschiebbar sind, und wobei die axial gerichteten Abschnitte (30, 31, 34, 35) eine Länge aufweisen, die eine dichtende Anlage der Dichtlippen (40, 43) der inneren und äußeren Dichtungsgarnitur (38, 42) über den gesamten axialen Verschiebeweg (48) gewährleisten.

2. Dichtungsanordnung (24) in Kassettenbauweise mit je einem inneren und äußeren, ringförmigen Gehäuse (29, 33), die einen etwa U-förmigen Querschnitt aufweisen und relativ zueinander drehbar sind, einer ersten, inneren Dichtungsgarnitur (38) und einer zweiten, äußeren Dichtungsgarnitur (42) mit zumindest je einer Dichtlippe (40, 43), die an axial gerichteten Abschnitten (30, 31, 34) der ringförmigen Gehäuse (29, 33) dichtend anliegen, dadurch **gekennzeichnet**, daß der äußere, axial gerichtete Abschnitt (31) des inneren, ringförmigen Gehäuses (29) parallel zu und zwischen den Abschnitten (34, 35) des äußeren, ringförmigen Gehäuses (33) verläuft, und die innere Dichtungsgarnitur (38) zwischen den beiden inneren, axial gerichteten Abschnitten (30, 34) des inneren und äußeren, ringförmigen Gehäuses angeordnet ist, und die äußere Dichtungsgarnitur (42) zwischen dem äußeren, axial gerichteten Abschnitt (31) des inneren Gehäuses (29) und dem inneren, axial gerichteten Abschnitt (34) des äußeren, ringförmigen Gehäuses (33) angeordnet ist, wobei das innere und äußere, ringförmige Gehäuse (29, 33) in Axialrichtung relativ zueinander verschiebbar sind, und wobei die axial gerichteten Abschnitte (30, 31, 34, 35) eine Länge aufweisen, die eine dichtende Anlage der Dichtlippen (38, 42) über den gesamten axialen Verschiebeweg (48) gewährleisten.

3. Dichtungsanordnung nach Anspruch 1 oder 2, dadurch **gekennzeichnet**, daß die innere Dichtungsgarnitur (38) am inneren, axial gerichteten Abschnitt (30) des inneren, ringförmigen Gehäuses (29) montiert ist und mit radial nach außen gerichteten Dichtlippen (40) am inneren, axial gerichteten Abschnitt (34) des äußeren, ringförmigen Gehäuses (33) anliegt.

4. Dichtungsanordnung nach Anspruch 1, dadurch **gekennzeichnet**, daß die äußere Dichtungsgarnitur (42) am äußeren, axial gerichteten Abschnitt (35) des äußeren, ringförmigen Gehäuses (33) montiert ist und mit radial nach innen gerichteten Dichtlippen (43) am äußeren, axial gerichteten Abschnitt (31) des inneren, ringförmigen Gehäuses (29) anliegt.

5. Dichtungsanordnung nach Anspruch 2, dadurch **gekennzeichnet**, daß die äußere Dichtungsgarnitur (42) am äußeren, axial gerichteten Abschnitt (31) des inneren, ringförmigen Gehäuses (29) montiert ist und mit radial nach innen gerichteten Dichtlippen (43) am inneren, axial gerichteten Abschnitt (34) des äußeren, ringförmigen Gehäuses (33) anliegt.

6. Dichtungsanordnung nach Anspruch 1 oder 2, 3 sowie Anspruch 5, dadurch **gekennzeichnet**, daß die Dichtlippen (40) der inneren Dichtungsgarnitur (38) als Abstreiflippen ausgebildet sind, die radial und schräg zum Außenraum (21) gerichtet verlaufen.

7. Dichtungsanordnung nach Anspruch 6, dadurch **gekennzeichnet**, daß mehr als zwei Abstreiflippen (40) vorgesehen sind.

8. Dichtungsanordnung nach Anspruch 1 und 4 oder 2 und 5, dadurch **gekennzeichnet**, daß die äußere Dichtungsgarnitur (42) als Radialwellendichtring (45) ausgebildet ist, der zumindest eine federbelastete Dichtlippe (43) aufweist.

9. Dichtungsanordnung nach Anspruch 8, dadurch **gekennzeichnet**, daß der Radialwellendichtring (45) zwei federbelastete Dichtlippen (43) aufweist, deren axialer Abstand (49) größer als die Axialverschiebung (48) der Antriebswelle (26) ist.

10. Dichtungsanordnung nach Anspruch 8, dadurch **gekennzeichnet**, daß zwischen dem Außenraum (21) und der dem Innenraum (20) zugekehrten, federbelasteten Dichtlippe (43) zumindest eine Schutzlippe (53) vorgesehen ist, die Bestandteil des Radialwellendichtrings (45) ist.

11. Dichtungsanordnung nach den Ansprüchen 1 sowie 8, dadurch **gekennzeichnet**, daß der äußere, axial gerichtete Abschnitt (31) des inneren, ringförmigen Gehäuses (29) in einen, bezogen auf den Längsquerschnitt des Gehäuses, etwa vertikal gerichteten Bund (32) übergeht, der zwischen der geschlossenen Ringfläche (36) und dem Radialwellendichtring (45) liegt.

12. Dichtungsanordnung nach den Ansprüchen 5 und 8, dadurch **gekennzeichnet**, daß der Radialwellendichtring (45) in das innere bzw. äußere, ringförmige Gehäuse (29, 33) eingepreßt und durch eine Verbördelung (46) gesichert ist.

13. Dichtungsanordnung nach den Ansprüchen 1 bis 5, dadurch **gekennzeichnet**, daß der innere, axial gerichtete Abschnitt (30) des inneren, ringförmigen Gehäuses (29) mit einer Innengummierung (37) versehen ist.

14. Dichtungsanordnung nach den Ansprüchen 6 und 7, dadurch **gekennzeichnet**, daß die innere Dichtungsgarnitur (38) als separates Bauteil ausgebildet ist.

15. Dichtungsanordnung nach den Ansprüchen 7 und 9, dadurch **gekennzeichnet**, daß die Räume (50, 51) zwischen den Abstreif- und Dichtlippen mit Fett gefüllt sind.

16. Dichtungsanordnung nach Anspruch 12, dadurch **gekennzeichnet**, daß zwischen dem Radialwellendichtring (45) und der Verbördelung (46) ein Stützwinkel (47) eingeschaltet ist.

17. Dichtungsanordnung nach Anspruch 1 oder 2, dadurch **gekennzeichnet**, daß die innere Dichtungsgarnitur (38) am inneren, axial gerichteten Abschnitt (34) des äußeren, ringförmigen Gehäuses (33) montiert ist und mit radial nach innen gerichteten Dichtlippen (40) am inneren, axial gerichteten Abschnitt (30) des inneren, ringförmigen Gehäuses (29) anliegt.

18. Dichtungsanordnung nach Anspruch 17, dadurch **gekennzeichnet**, daß der Dichtungsgarnitur (38) ein Ringkragen (54) vorgeschaltet ist, bezogen auf den Außenraum (21).

19. Dichtungsanordnung nach Anspruch 1, dadurch **gekennzeichnet**, daß der Volumenänderungsfaktor der Volumina des Innenraums (55) der Dichtungsanordnung (24) bei relativer Axialverschiebung des inneren und äußeren Gehäuses (29, 33) in einem Bereich vom Faktor 1,056 bis Faktor 1,280 liegt.

20. Verwendung der Dichtungsanordnung nach Anspruch 1 oder 2, 6, 11, 13 zum Abdichten einer axial verschiebbar gelagerten Antriebswelle (26) einer gelenkten Achse eines land- oder bauwirtschaftlich genutzten Fahrzeugs.

21. Axial verschiebbar gelagerten Antriebswelle (26) einer gelenkten Achse eines land- oder bauwirtschaftlich genutzten Fahrzeugs, die von einem Innenraum (20) eines Achsrohrs (3) durch einen Außerraum (21) zu einem Endabtriebsgehäuse (15) gegeführt ist, mit einer Dichtungsanordnung nach mindestens einem der Ansprüche 1 bis 5, dadurch **gekennzeichnet**, daß das äußere, ringförmige Gehäuse (33) ortsfest im Achsrohr (3) oder im Endabtriebsgehäuse (15) in der Weise montiert ist, daß seine geschlossene Ringfläche (36) dem Außenraum (21) zugekehrt ist, und daß das innere, ringförmige Gehäuse (29) mit der Antriebswelle (26) verbunden ist.

## Claims

1. Cartridge-style sealing arrangement (24), having an inner and an outer annular housing (29, 33) which have a substantially U-shaped cross-section and are rotatable relative to one another, a first inner seal fitting (38) and a second outer seal fitting (42) each with at least one sealing lip (40, 43) lying sealingly against axially directed portions (30, 31, 34, 35) of the annular housing (29, 33), characterized in that the outer axially directed portion (31) of the inner annular housing (29) extends parallel to and between the portions (34, 35) of the outer annular housing (33) and the inner seal fitting (38) is disposed between the two inner axially directed portions (30, 34) of the inner and outer annular housings, and the outer seal fitting (42) is disposed between the two outer axially directed portions (31, 35) of the inner and outer annular housings (29, 33), the inner and outer annular housings (29, 33) being displaceable in an axial direction relative to one another, and the axially directed portions (30, 31, 34, 35) having a length which guarantees a sealing application of the sealing lips (40, 43) of the inner and outer seal fittings (38, 42) over the entire axial displacement path (48).

2. Cartridge-style sealing arrangement (24), having an inner and an outer annular housing (29, 33) which have a substantially U-shaped cross-section and are rotatable relative to one another, a first inner seal fitting (38) and a second outer seal fitting (42) each with at least one sealing lip (40, 43) lying sealingly against axially directed portions (30, 31, 34) of the annular housings (29, 33), characterized in that the outer axially directed portion (31) of the inner annular housing (29) extends parallel to and between the portions (34, 35) of the outer annular housing (33), and the inner seal fitting (38) is disposed between the two inner axially directed portions (30, 34) of the inner and outer annular housings, and the outer seal fitting (42) is disposed between the outer axially directed portion (31) of the inner housing (29) and the inner axially directed portion (34) of the outer annular housing (33), the inner and outer annular housings (29, 33) being displaceable in an axial direction relative to one another, and the axially directed portions (30, 31, 34, 35) having a length which guarantees a sealing application of the sealing lips (38, 42) over the entire axial displacement path (48).

3. Sealing arrangement according to claim 1 or 2, characterized in that the inner seal fitting (38) is mounted on the inner axially directed portion (30) of the inner annular housing (29) and rests with radially outwardly directed sealing lips (40) against the inner axially directed portion (34) of the outer annular housing (33).

4. Sealing arrangement according to claim 1, characterized in that the outer seal fitting (42) is mounted on the outer axially directed portion (35) of the outer annular housing (33) and rests with radially inwardly directed sealing lips (43) against the outer axially directed portion (31) of the inner annular housing (29).

5. Sealing arrangement according to claim 2, characterized in that the outer seal fitting (42) is mounted on the outer axially directed portion (31) of the inner annular housing (29) and rests with radially inwardly directed sealing lips (43) against the inner axially directed portion (34) of the outer annular housing (33).

6. Sealing arrangement according to claim 1 or 2, 3 as well as claim 5, characterized in that the sealing lips (40) of the inner seal fitting (38) take the form of scraper lips which extend radially and directed obliquely relative to the outer chamber (21).

7. Sealing arrangement according to claim 6, characterized in that more than two scraper lips (40) are provided.

8. Sealing arrangement according to claim 1 and 4 or 2 and 5, characterized in that the outer seal fitting (42) takes the form of a rotary shaft lip seal (45) which has at least one spring-loaded sealing lip (43).

9. Sealing arrangement according to claim 8, characterized in that the rotary shaft lip seal (45) has two spring-loaded sealing lips (43), whose axial clearance (49) is greater than the axial displacement (48) of the drive shaft (26).

10. Sealing arrangement according to claim 8, characterized in that provided between the outer chamber (21) and the spring-loaded sealing lip (43) nearest the inner chamber (20) is at least one protective lip (53) which is part of the rotary shaft lip seal (45).

11. Sealing arrangement according to claims 1 and 8, characterized in that the outer axially directed portion (31) of the inner annular housing (29) verges into an - in relation to the longitudinal cross-section of the housing - substantially vertically directed collar (32) which lies between the closed annular surface (36) and the rotary shaft lip seal (45).

12. Sealing arrangement according to claims 5 and 8, characterized in that the rotary shaft lip seal (45) is pressed into the inner and/or outer annular housing (29, 33) and secured by means of a flanged portion (46).

13. Sealing arrangement according to claims 1 to 5, characterized in that the inner axially directed portion (30) of the inner annular housing (29) is provided with an internal rubber coating (37).

14. Sealing arrangement according to claims 6 and 7, characterized in that the inner seal fitting (38) is a separate structural component.

15. Sealing arrangement according to claims 7 and 9, characterized in that the chambers (50, 51) between the scraper and sealing lips are filled with grease.

16. Sealing arrangement according to claim 12, characterized in that a support angle (47) is inserted between the rotary shaft lip seal (45) and the flanged portion (46).

17. Sealing arrangement according to claim 1 or 2, characterized in that the inner seal fitting (38) is mounted on the inner axially directed portion (34) of the outer annular housing (33) and rests with radially inwardly directed sealing lips (40) against the inner axially directed portion (30) of the inner annular housing (29).

18. Sealing arrangement according to claim 17, characterized in that an annular collar (54) is inserted - relative to the outer chamber (21) - in front of the seal fitting (38).

19. Sealing arrangement according to claim 1, characterized in that the volume change factor of the volumes of the inner chamber (55) of the sealing arrangement upon relative axial displacement of the inner and outer housings (29, 33) lies in a range from factor 1.056 to factor 1.280.

20. Use of the sealing arrangement according to claim 1 or 2, 6, 11, 13 for sealing an axially displaceably supported drive shaft (26) of a steered axle of a vehicle used in agriculture or the building and construction industry.

21. Axially displaceably supported drive shaft (26) of a steered axle of a vehicle used in agriculture or the building and construction industry, which shaft is led from an inner chamber (20) of an axle tube (3) through an outer chamber (21) to an end output housing (15), having a sealing arrangement according to at least one of claims 1 to 5, characterized in that the outer annular housing (33) is mounted in a fixed manner in the axle tube (3) or in the end output housing (15) in such a way that its closed annular surface (36) is turned towards the outer chamber (21), and that the inner annular housing (29) is connected to the drive shaft (26).

## Revendications

1. Dispositif d'étanchéité (24) en cassette, comportant une cage annulaire intérieure et une cage annulaire extérieure (29, 33) qui présentent chacune une section transversale sensiblement en forme de U et sont rotatives l'une par rapport à l'autre, une première garniture intérieure d'étanchéité (38) et une seconde garniture extérieure d'étanchéité (42) ayant chacune au moins une lèvre d'étanchéité (40, 43) qui est jointe de manière étanche à des sections orientées axialement (30, 31, 34, 35) de la cage annulaire (29, 33), **caractérisé** en ce que la section extérieure orientée axialement (31) de la cage annulaire intérieure (29) s'étend parallèlement à et entre lesdites sections (34, 35) de la cage annulaire extérieure (33), la garniture intérieure d'étanchéité (38) est disposée entre les deux sections intérieures orientées axialement (30, 34) des cages annulaires intérieure et extérieure, et la garniture extérieure d'étanchéité (42) est disposée entre les deux sections extérieures orientées axialement (31, 35) des cages annulaires intérieure et extérieure (29, 33), les cages annulaires intérieure et extérieure (29, 33) étant coulissantes l'une par rapport à l'autre en direction axiale, et les sections orientées axialement (30, 31, 34, 35) ayant une longueur qui garantit un joint étanche avec les lèvres d'étanchéité (40, 43) des garnitures intérieure et extérieure d'étanchéité (38, 42) sur toute la course axiale de coulissement (48).

2. Dispositif d'étanchéité (24) en cassette, comportant une cage annulaire intérieure et une cage annulaire extérieure (29, 33) qui présentent chacune une section transversale sensiblement en forme de U et sont rotatives l'une par rapport à l'autre, une première garniture intérieure d'étanchéité (38) et une seconde garniture extérieure d'étanchéité (42) ayant chacune au moins une lèvre d'étanchéité (40, 43) qui est jointe de manière étanche à des sections orientées axialement (30, 31, 34) des cages annulaires (29, 33), **caractérisé** **en** ce que la section extérieure orientée axialement (31) de la cage annulaire intérieure (29) s'étend parallèlement à et entre lesdites sections (34, 35) de la cage annulaire extérieure (33), la garniture intérieure d'étanchéité (38) est disposée entre les deux sections intérieures orientées axialement (30, 34) des cages annulaires intérieure et extérieure, et la garniture extérieure d'étanchéité (42) est disposée entre la section extérieure orientée axialement (31) de la cage intérieure (29) et la section intérieure orientée axialement (34) de la cage annulaire extérieure (33), les cages annulaires intérieure et extérieure (29, 33) étant coulissantes l'une par rapport à l'autre en direction axiale, et les sections orientées axialement (30, 31, 34, 35) ayant une longueur qui garantit un joint étanche avec les lèvres d'étanchéité (38, 42) sur toute la course axiale de coulissement (48).

3. Dispositif d'étanchéité selon la revendication 1 ou 2, **caractérisé** en ce que la garniture intérieure d'étanchéité (38) est montée sur la section intérieure orientée axialement (30) de la cage annulaire intérieure (29) et est jointe, par des lèvres d'étanchéité (40) dirigées radialement vers l'extérieur, à la section intérieure orientée axialement (34) de la cage annulaire extérieure (33).

4. Dispositif d'étanchéité selon la revendication 1, **caractérisé** en ce que la garniture extérieure d'étanchéité (42) est montée sur la section extérieure orientée axialement (35) de la cage annulaire extérieure (33) et est jointe, par des lèvres d'étanchéité (43) dirigées radialement vers l'intérieur, à la section extérieure orientée axialement (31) de la cage annulaire intérieure (29).

5. Dispositif d'étanchéité selon la revendication 2, **caractérisé** en ce que la garniture extérieure d'étanchéité (42) est montée sur la section extérieure orientée axialement (31) de la cage annulaire intérieure (29) et est jointe, par des lèvres d'étanchéité (43) dirigées radialement vers l'intérieur, à la section intérieure orientée axialement (34) de la cage annulaire extérieure (33).

6. Dispositif d'étanchéité selon la revendication 1 ou 2, 3, ainsi que la revendication 5, **caractérisé** en ce que les lèvres d'étanchéité (40) de la garniture intérieure d'étanchéité (38) sont formées par des lèvres racleuses qui sont orientées radialement et obliquement par rapport à la chambre extérieure (21).

7. Dispositif d'étanchéité selon la revendication 6, **caractérisé** en ce que plus de deux lèvres racleuses (40) sont prévues.

8. Dispositif d'étanchéité selon les revendications 1 et 4 ou 2 et 5, **caractérisé** en ce que la garniture extérieure d'étanchéité (42) est formée par un joint radial d'étanchéité d'arbre (45) qui comporte au moins une lèvre d'étanchéité (43) chargée élastiquement.

9. Dispositif d'étanchéité selon la revendication 8, **caractérisé** en ce que le joint radial d'étanchéité d'arbre (45) comporte deux lèvres d'étanchéité chargées élastiquement (43), dont l'écartement axial (49) est plus grand que le coulissement axial (48) de l'arbre d'entraînement (26).

10. Dispositif d'étanchéité selon la revendication 8, **caractérisé** en ce qu'il est prévu, entre la chambre extérieure (21) et la lèvre d'étanchéité chargée élastiquement (43) et dirigée vers la chambre intérieure (20), au moins une lèvre de protection (53) qui fait partie du joint radial d'étanchéité d'arbre (45).

11. Dispositif d'étanchéité selon les revendications 1 et 8, **caractérisé** en ce que la section extérieure orientée axialement (31) de la cage annulaire intérieure (29) est raccordée à un rebord (32) orienté sensiblement verticalement, en vue en coupe longitudinale de la cage, ce rebord se trouvant entre la surface annulaire fermée (36) et le joint radial d'étanchéité d'arbre (45)

12. Dispositif d'étanchéité selon les revendications 5 et 8, **caractérisé** en ce que le joint radial d'étanchéité d'arbre (45) est monté de manière pressée dans la cage annulaire extérieure ou intérieure (29, 33), où il est retenu par un collet rabattu (46).

13. Dispositif d'étanchéité selon l'une des revendications 1 à 5, **caractérisé** en ce que la section intérieure orientée axialement (30) de la cage annulaire intérieure (29) est pourvue d'un revêtement intérieur en caoutchouc (37).

14. Dispositif d'étanchéité selon les revendications 6 et 7, **caractérisé** en ce que la garniture intérieure d'étanchéité (38) est formée par un élément séparé.

15. Dispositif d'étanchéité selon les revendications 7 et 9, **caractérisé** en ce que les intervalles (50, 51) entre les lèvres racleuses et d'étanchéité sont remplis de graisse.

16. Dispositif d'étanchéité selon la revendication 12, **caractérisé** en ce qu'une équerre d'appui (47) est interposée entre le joint radial d'étanchéité d'arbre (45) et le collet rabattu (46).

17. Dispositif d'étanchéité selon la revendication 1 ou 2, **caractérisé** en ce que la garniture intérieure d'étanchéité (38) est montée sur la section intérieure orientée axialement (34) de la cage annulaire extérieure (33) et est jointe, par des lèvres d'étanchéité (40) dirigées radialement vers l'intérieur, à la section intérieure orientée axialement (30) de la cage annulaire intérieure (29).

18. Dispositif d'étanchéité selon la revendication 17, **caractérisé** en ce qu'un collet annulaire (54) est placé devant la garniture d'étanchéité (38) du côté de la chambre extérieure (21).

19. Dispositif d'étanchéité selon la revendication 1, **caractérisé** en ce que le facteur de variation de volume de la chambre intérieure (55) du dispositif d'étanchéité (24) lors d'un coulissement axial relatif des cages intérieure et extérieure (29, 33) est compris entre 1,056 et 1,280.

20. Utilisation du dispositif d'étanchéité selon la revendication 1 ou 2, 6, 11, 13 pour assurer l'étanchéité d'un arbre d'entraînement (26) monté de manière axialement coulissante dans un essieu directeur d'un véhicule à usage agricole ou de chantier.

21. Arbre d'entraînement (26) monté de manière axialement coulissante dans un essieu directeur d'un véhicule à usage agricole ou de chantier, l'arbre passant d'une chambre intérieure (20) d'un tube d'essieu (3) à une boîte de réduction finale (15) en traversant une chambre extérieure (21) et comportant un dispositif d'étanchéité selon au moins l'une des revendications 1 à 5, **caractérisé** en ce que la cage annulaire extérieure (33) est montée fixe dans le tube d'essieu (3) ou dans la boîte de réduction finale (15) de telle manière que sa surface annulaire fermée (36) se trouve du côté de la chambre extérieure (21), et en ce que la cage annulaire intérieure (29) est liée à l'arbre d'entraînement (26).
